# EUROPEAN PATENT APPLICATION

(11) **EP 4 838 968 A1**
(43) Date of publication of application: **11.11.2026**
(21) Application number: 24918159.5
(22) Date of filing: 30.10.2024
(51) Int. Cl.: H04W 56/00

(54) **COMMUNICATION METHOD AND COMMUNICATION APPARATUS**

(30) Priority: 18.01.2024 CN 202410078326
(71) Applicant: Huawei Technologies Co., Ltd., Shenzhen, Guangdong 518129 (CN)
(72) Inventor: XIANG, Hongyu, Shenzhen, Guangdong 518129 (CN); XU, Bin, Shenzhen, Guangdong 518129 (CN)
(74) Representative: Huawei European IPR
(86) International application number: PCT/CN2024/128370
(87) International publication number: WO 2025/152550

(57) **Abstract**

This application provides a communication method, including: sending, by a network device, a first message to a terminal device, to indicate that the terminal device can still perform uplink transmission when ephemeris information becomes invalid. When the ephemeris information becomes invalid, the terminal device starts a first timer, and still performs uplink transmission during a running period of the first timer. The first message indicates that the terminal device can perform uplink transmission when the ephemeris information becomes invalid. In addition, the terminal device can start or restart the first timer when the ephemeris information becomes invalid, thereby controlling a duration of uplink transmission when the ephemeris information becomes invalid.

## Description

This application claims priority to Chinese Patent Application No. 202410078326.X, filed with China National Intellectual Property Administration on January 18, 2024, and entitled "Communication Method and Communication Apparatus", which is incorporated herein by reference in its entirety.

### TECHNICAL FIELD

Embodiments of this application relate to a communication field, and in particular, to a communication method and a communication apparatus.

### BACKGROUND

In the 5^{th} generation (5^{th} generation, 5G) communication system, research on non-terrestrial network (NTN) technology has been introduced, which involves aircrafts (such as airplanes, drones, etc.) or satellites into the communication system to function as relay nodes or base stations. In an NTN network, the ephemeris information of satellites plays an important role in communication. For instance, by providing satellite ephemeris information through the network, a terminal device can calculate the delay from the terminal device to the satellite based on its own location. Additionally, by combining the delay information from the satellite to the satellite gateway provided by the cell, the terminal device can calculate the end-to-end delay from the terminal device to the base station, which is used for pre-compensation of timing advance. Meanwhile, once the network is aware of the timing advance of the terminal device, it can perform data scheduling more effectively.

However, the ephemeris information of satellites has a time-limited validity. If the ephemeris information becomes invalid, it may prevent the terminal device from performing uplink (UL) transmission. Therefore, how to enable terminal devices in an NTN network to continue uplink transmission even when the ephemeris information is invalid has become an urgent issue that needs to be addressed.

### SUMMARY

This application provides a communication method, so that a terminal device in an NTN network can continue to perform uplink transmission when ephemeris information becomes invalid.

According to a first aspect, a communication method is provided. The method may be performed by a terminal device, or may be performed by a chip, a circuit, or the like. This is not limited in this application.

The communication method comprises: receiving a first message, where the first message indicates that uplink transmission can be performed when ephemeris information becomes invalid; starting or restarting a first timer when the ephemeris information becomes invalid, wherein the uplink transmission is performed during first duration, and wherein the first duration is a running duration of the first timer; and stopping the uplink transmission after the first timer expires.

Based on the foregoing technical solution, an example in which an execution entity is a terminal device is used. After receiving the first message, the terminal device learns, based on the first message, that uplink transmission can be performed when the ephemeris information becomes invalid; and the terminal device starts or restarts the first timer when the ephemeris information becomes invalid, so as to control, based on the first timer, a duration of performing uplink transmission when the ephemeris information becomes invalid. Specifically, the terminal device may perform uplink transmission during the running of the first timer, and the terminal device stops the uplink transmission after the first timer expires (or when the first timer expires, or when the first timer expires). In this technical solution, the first message may indicate that the terminal device can perform uplink transmission when the ephemeris information becomes invalid. In addition, when the ephemeris information becomes invalid, the terminal device may start or restart the first timer, to control a duration of performing uplink transmission when the ephemeris information becomes invalid, so that the terminal device can continue to perform uplink transmission when the ephemeris information becomes invalid.

According to the first aspect, in some embodiments of the first aspect, the method further comprises: receiving a second message during the first duration, and restarting the first timer.

Based on the foregoing technical solution, during the running period of the first timer, the first timer may be instructed to restart through the second message, thereby extending the timing duration of the first timer to some extent, and consequently extending the duration for performing uplink transmission when the ephemeris information becomes invalid.

According to the first aspect, in some embodiments of the first aspect, the first duration is configured by a network device side, or the first duration is determined by a terminal device side.

Based on the aforementioned technical solution, the timing duration of the first timer may be configured by the network device side, or may be determined by the terminal device itself, thereby enhancing the flexibility of the solution.

According to the first aspect, in some embodiments of the first aspect, the stopping the uplink transmission after the first timer expires comprises: after the first timer expires, obtaining updated ephemeris information, and stopping the uplink transmission.

Based on the foregoing technical solution, when the first timer expires, the terminal device needs to stop uplink transmission. In order to continue to perform uplink transmission based on the updated ephemeris information, the terminal device may attempt to obtain the updated ephemeris information, so that uplink transmission can be subsequently performed based on the updated ephemeris information.

According to the first aspect, in some embodiments of the first aspect, the method further comprises: performing the uplink transmission based on the updated ephemeris information.

According to the first aspect, in some embodiments of the first aspect, before the receiving the first message, the method further comprises: receiving a third message, where the third message indicates second duration and a second moment, the second moment is a start moment of a second timer, the second duration is an operating duration of the second timer, and the uplink transmission is performed during the second duration; and after the second timer expires, the ephemeris information becomes invalid.

Based on the foregoing technical solution, before receiving the first message, the terminal may learn, based on the second duration and the second moment indicated by the received third message, the start moment and the operating duration of the second timer, where the second timer can determine whether the ephemeris information is valid. For example, the ephemeris information is valid during the operating period of the second timer, and the ephemeris information becomes invalid after the second timer expires (or when the second timer expires, or when the second timer expires).

According to the first aspect, in some embodiments of the first aspect, the invalidating the ephemeris information after the second timer expires comprises: after the second timer expires, obtaining updated ephemeris information; and restarting the second timer and stopping the first timer.

Based on the foregoing technical solution, if the terminal device can obtain the updated ephemeris information when the second timer expires, the terminal device restarts the second timer, and if the first timer is running, stops the first timer.

According to the first aspect, in some embodiments of the first aspect, the first message comprises uplink transmission extension capability information, and the uplink transmission extension capability information further indicates that the uplink transmission can be performed when global navigation satellite system information GNSS information is invalid.

Based on the foregoing technical solution, the first message may reuse existing uplink transmission extension capability information (ul-TransmissionExtensionEnabled), thereby improving backward compatibility of the solution.

According to a second aspect, a communication method is provided. The method may be performed by a network device, or may be performed by a chip, a circuit, or the like. This is not limited in this application.

The communication method comprises: determining a first message, where the first message indicates that an uplink transmission can be performed when ephemeris information becomes invalid; and sending the first message.

According to the second aspect, in some embodiments of the second aspect, the method further comprises: sending configuration information, wherein the configuration information is used to configure first duration, the first duration is an operating duration of a first timer, and the first timer is used to control duration of uplink transmission when the ephemeris information becomes invalid.

According to the second aspect, in some embodiments of the second aspect, the method further comprises: sending a second message, wherein the second message is used to indicate a restart of the first timer.

According to the second aspect, in some embodiments of the second aspect, before the sending the first message, the method further comprises: sending a third message, wherein the third message indicates second duration and a second moment, the second moment is an initiation moment of a second timer, the second duration is an operating duration of the second timer, and the second timer is used to control an invalidation moment of the ephemeris information.

According to the second aspect, in some embodiments of the second aspect, the first message comprises uplink transmission extension capability information, and the uplink transmission extension capability information further indicates that the uplink transmission can be performed when the global navigation satellite system (GNSS) information fails.

For technical effects of the method according to the second aspect and the possible embodiments thereof, please refer to the technical effects in the first aspect and the possible embodiments thereof.

According to a third aspect, a communication apparatus is provided. The communication apparatus is configured to perform the first aspect and any one of the embodiments thereof. Specifically, the communication apparatus comprises a processor and a memory, where the memory is configured to store a computer program; and the processor is configured to invoke the computer program from the memory and run the computer program, so that the communication apparatus performs the first aspect and any one of the embodiments thereof.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a terminal device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The communication apparatus is configured to perform the second aspect and any one of the embodiments of the second aspect. Specifically, the communication apparatus comprises a processor and a memory, where the memory is configured to store a computer program; and the processor is configured to invoke the computer program from the memory and run the computer program, so that the network device performs the second aspect and any one of the embodiments of the second aspect.

In an implementation, the communication apparatus is a network device. When the communication apparatus is a network device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in a network device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fifth aspect, a computer-readable storage medium is provided. The computer-readable storage medium stores a computer program, and when the computer program is run, the method according to any one of the embodiments of the first aspect or the second aspect is performed.

According to a sixth aspect, a computer program product comprising an instruction is provided. When the computer program product is run, the method provided in any one of the embodiments of the first aspect or the second aspect is performed.

According to a seventh aspect, a chip is provided. The chip comprises a processor and a communication interface. The processor reads an instruction through the communication interface, to perform the method provided in any one of the embodiments of the first aspect or the second aspect.

Optionally, in an implementation, the chip further comprises a memory, where the memory stores a computer program or instructions, and the processor is configured to execute the computer program or the instructions stored in the memory. When the computer program or the instructions are executed, the processor is configured to perform the method provided in any one of the embodiments of the first aspect or the second aspect.

According to an eighth aspect, a communication system is provided, including the communication apparatus according to the third aspect and the communication apparatus according to the fourth aspect.

According to a ninth aspect, a computer program is provided. When the computer program is run, the method provided in any one of the embodiments of the first aspect or the second aspect is performed.

### BRIEF DESCRIPTION OF DRAWINGS

FIG. 1 is a schematic diagram of a network architecture to which an embodiment of this application is applicable;
FIG. 2 is a schematic diagram of transmission delays of different links.
FIG. 3 is a schematic flowchart of a communication method according to an embodiment of this application.
FIG. 4 is a schematic block diagram of a communication apparatus according to an embodiment of this application.
FIG. 5 is a schematic diagram of another communication apparatus according to an embodiment of this application.
FIG. 6 is a schematic diagram of a chip system according to an embodiment of this application.

### DESCRIPTION OF EMBODIMENTS

For ease of understanding of the embodiments of this application, the following descriptions are first explained.

First, in this application, "used for indication" may include "used for direct indication" and "used for indirect indication." When it is described that certain indication information is used to indicate A, it may include that the indication information directly indicates A or indirectly indicates A, but it does not necessarily mean that the indication information includes A.

Information indicated by the indication information is referred to as to-be-indicated information, then there are various ways to indicate the to-be-indicated information in the specific implementation process. For example, but not limited to, the to-be-indicated information may be directly indicated, such as by directly indicating the to-be-indicated information itself or an index of the to-be-indicated information. Alternatively, the to-be-indicated information may be indirectly indicated by indicating other information that has an associated relationship with the to-be-indicated information. It is also possible to indicate only a part of the to-be-indicated information, while the other parts of the to-be-indicated information are known or pre-agreed upon. For instance, the indication of specific information may be achieved by leveraging the pre-agreed (e.g., as stipulated by a protocol) order of the arrangement of various pieces of information, thereby reducing the indication overhead to some extent. Additionally, the common parts of the information may be identified and uniformly indicated to reduce the indication overhead caused by separately indicating the same information.

Second, in this application, "at least one" means one or more, and "a plurality of" means two or more. In addition, in the embodiments of this application, "first," "second," and various numerical numbers (for example, "#1," "#2," and the like) are merely used for differentiation for ease of description, and are not intended to limit the scope of the embodiments of this application. The sequence numbers of the processes described below do not mean an order of execution. The execution order of the processes should be determined based on their functions and internal logic, and should not constitute any limitation on the implementation process of the embodiments of this application. It should be understood that the objects described in this way may be interchangeable in appropriate circumstances, so as to describe solutions beyond the embodiments of this application. In addition, in the embodiments of this application, terms such as "S310" are merely identifiers for ease of description, and do not limit the order of performing the steps.

Third, in the embodiments of this application, a term such as "example" or "for example" are used to indicate an illustration, an instance, or an explanation. Any embodiment or design described as "example" or "for example" in this application should not be construed as being more preferred or having more advantages than other embodiments or embodiments. On the contrary, the use of the term "example" or "for example" is intended to present a related concept in a specific manner.

Fourth, "storing" in the embodiments of this application may mean storing in one or more memories. The one or more memories may be separately disposed, or may be integrated into an encoder or decoder, a processor, or a communication apparatus. Alternatively, some of the one or more memories may be separately disposed, and some may be integrated into a decoder, a processor, or a communication apparatus. The memory may be any form of storage medium, and this is not limited in this application.

Fifth, in the embodiments of this application, "protocol" may refer to a standard protocol in the communication field, for example, may include an NR protocol and a related protocol applied to a future communication system. This is not limited in this application.

Sixth, in the embodiments of this application, "of (of)", "corresponding (corresponding, relevant)", "corresponding (corresponding)", and "associated (associate)" may be used interchangeably at times. It should be noted that when a difference between these terms is not emphasized, the meanings they intend to express are the same.

Seventh, in the embodiments of this application, "under a case of," "when," and "if" may sometimes be used interchangeably. It should be noted that when no distinction is emphasized, the meanings they intend to express are the same.

Eighth, the term "and/or" in this specification describes only an association relationship between associated objects and represents that three relationships may exist. For example, A and/or B may represent the following three cases: only A exists, both A and B exist, and only B exists. In addition, the character "/" in this specification generally indicates an "or" relationship between the associated objects.

Ninth, terms such as "message," "information," or "information element (information element, IE)" in this specification may be used interchangeably, and no limitation is imposed on the names of the message or information, provided that a corresponding function can be implemented.

The following describes technical solutions of this application according to the drawings.

The technical solutions provided in this application may be applied to various communication systems, for example, a 5^{th} generation (5^{th} generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to future communication systems, such as a 6^{th} generation mobile communication system. The technical solutions provided in this application may also be applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

First, a network architecture applicable to this application is briefly described as follows.

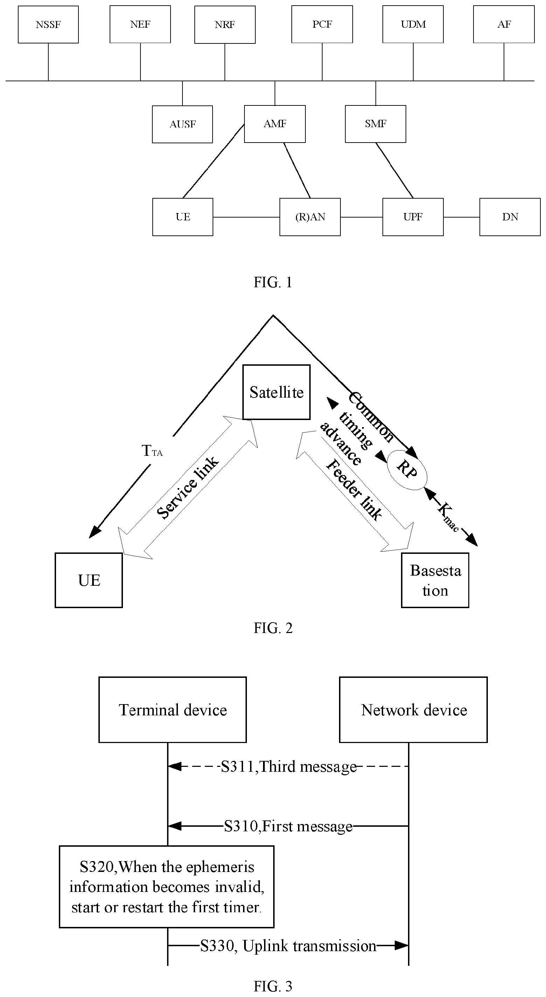

As an example, FIG. 1 is a schematic diagram of a network architecture.

As shown in FIG. 1, the network architecture uses a 5G system (the 5^{th} generation system, 5GS) as an example. The network architecture may include but is not limited to: a network slice selection function (network slice selection function, NSSF), an authentication server function (authentication server function, AUSF), a unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN).

Herein, the DN may be the Internet; the NSSF, AUSF, UDM, NEF, NRF, PCF, AF, AMF, SMF, and UPF belong to network elements in the core network. Since Figure 1 uses a 5G system as an example, this core network may be referred to as a 5G core network (5G core network, 5GC, or 5GCN).

The following provides a brief introduction to the network elements shown in Figure 1.
1. UE: may be referred to as a terminal device, access terminal, subscriber unit, subscriber station, mobile station, mobile console, remote station, remote terminal, mobile device, user terminal, terminal, wireless communication device, user agent, or user apparatus.

A terminal device may be a device that provides voice/data services to users, such as a handheld device or an in-vehicle device with wireless connectivity. Currently, some examples of terminal devices include: mobile phones (mobile phone), tablets, laptops, personal digital assistants (PDA), mobile internet devices (MID), wearable devices, virtual reality (VR) devices, augmented reality (AR) devices, wireless terminals in industrial control (industrial control), wireless terminals in self-driving (self driving), wireless terminals in remote medical surgery (remote medical surgery), wireless terminals in smart grid (smart grid), wireless terminals in transportation safety (transportation safety), wireless terminals in smart city (smart city), wireless terminals in smart home (smart home), cellular phones, cordless phones, session initiation protocol (SIP) phones, wireless local loop (WLL) stations, personal digital assistants (PDA), handheld devices with wireless communication capabilities, computing devices or other processing devices connected to a wireless modem, wearable devices, terminal devices in 5G networks, or terminal devices in future evolved public land mobile networks (PLMN), and the like. This is not limited in the embodiments of this application.

By way of example and not limitation, in the embodiments of this application, the terminal device may also be a wearable device. A wearable device may also be referred to as a wearable smart device, which is a general term for devices developed through the application of wearable technology that intelligently embodiments everyday wearables for use as wearable devices, such as glasses, gloves, watches, clothing, and shoes. Wearable devices are portable devices that are either worn directly on the body or integrated into the user's clothing or accessories. These devices are not merely hardware; they also achieve powerful functionalities through software support, data interaction, and cloud interaction. Broadly speaking, wearable smart devices include those with full functionality and larger sizes that can perform complete or partial functions without relying on a smartphone, such as smartwatches or smart glasses, as well as those that focus on a specific type of application function and need to work in conjunction with other devices, such as smartphones, such as various smart wristbands or smart jewelry for monitoring physiological signs.

Moreover, in the embodiments of this application, the terminal device may also be a terminal device in an IoT system. IoT is an important component of future information technology development. Its main technical feature is the use of communication technology to connect objects to the Internet, thereby achieving an intelligent network that enables human-machine interconnection and machine-to-machine interconnection.

It should be noted that the terminal device may communicate with the access network device by using an air interface technology (such as an NR or LTE technology). The terminal devices may also communicate with each other by using an air interface technology (such as an NR or LTE technology).

In the embodiments of this application, an apparatus configured to implement a function of the terminal device may be the terminal device, or may be an apparatus (for example, a chip system or a chip) that can support the terminal device in implementing the function, and the apparatus may be installed in the terminal device. In the embodiments of this application, the chip system may include a chip, or may include a chip and another discrete component.

2. (Radio) access network (radio access network, (R)AN) device: may provide a function of accessing a communication network for an authorized user in a specific area, and may specifically include a radio network device in a 3^{rd} Generation Partnership Project (3^{rd} generation partnership project, 3GPP) network, or may include an access point in a non-3GPP (non-3GPP) network. For ease of description, an AN device is used for representation below.

AN devices may employ different radio access technologies. Currently, there are two types of radio access technologies: 3GPP access technologies (e.g., radio access technologies used in 3rd generation (3G), 4th generation (4G), or 5G systems) and non-3GPP (non-3GPP) access technologies. 3GPP access technologies refer to access technologies that comply with 3GPP standard specifications, where, for example, the access network device in a 5G system is referred to as a next generation NodeB (gNB) or a RAN device. Non-3GPP access technologies may include air interface technologies represented by access points (APs) in wireless fidelity (WiFi), worldwide interoperability for microwave access (WiMAX), code division multiple access (CDMA), and the like. AN devices may allow for interconnection and communication between terminal devices and 3GPP core networks using non-3GPP technologies.

The AN device is capable of managing radio resources, quality of service (QoS) management, data compression, and encryption on the air interface side. The AN device provides access services for terminal devices, thereby enabling the forwarding of control signals and user data between the terminal devices and the core network.

The AN device may include, for example, but are not limited to: a macro base station, a micro base station (also referred to as a small cell), a radio network controller (RNC), a NodeB (NB), a base station controller (BSC), a base transceiver station (BTS), a home evolved NodeB (or a home NodeB, HNB), a baseband unit (BBU), an AP in a WiFi system, a wireless relay node, a wireless backhaul node, a transmission point (TP), or a transmission and reception point (TRP), or the like. The AN device may also be a gNB or a transmission point (TRP or TP) in a 5G (e.g., NR) system, one or a group of antenna panels (including a plurality of antenna panels) of a base station in a 5G system, or may be a network node that forms a gNB or a transmission point, such as a distributed unit (DU), or a base station in a next-generation 6G communication system, or the like. The embodiments of this application do not limit the specific technology or the specific device form used by the AN device.

In some deployments, the gNB may include a centralized unit (CU), a DU, and a radio unit (RU). The CU may include a CU control plane (control plane, CP) and a CU user plane (user plane, UP). The RU may be an integration of some physical layer processing functions of the BBU and a remote radio unit (remote radio unit, RRU). In different systems, the CU (or the CU-CP and the CU-UP), the DU, or the RU may also have different names, but a person skilled in the art can understand their meanings. For example, the radio access network may also be an open radio access network (open radio access network, O-RAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP, the CU-UP), the DU, and the RU in this application may be implemented by using a software module, a hardware module, or a combination of a software module and a hardware module.

It should be noted that, in this application, a satellite may serve as a RAN, meaning that a terminal device may communicate with the core network device side via the satellite. For example, satellite communication can be used to address coverage issues in remote areas, such as mountainous regions and oceans. This method is referred to as regenerative satellite communication. Alternatively, the satellite may function solely as a radio frequency unit, meaning that the RAN functions are still performed by ground base stations. This is also a form of satellite communication implementation, known as transparent satellite communication.

3. AMF: Primarily used for functions such as access control, mobility management, attach and detach procedures.

4. SMF: Mainly used for user plane network element selection, user plane network element redirection, assignment of Internet Protocol (IP) addresses to terminal devices, as well as establishment, modification, and release of sessions, and QoS control.

5. UPF: Primarily used for receiving and forwarding user plane data. For example, the UPF may receive user plane data from the DN and send the user plane data to the terminal device via an AN device. The UPF may also receive user plane data from the terminal device through an AN device and forward it to the DN.

6. NEF: Primarily used to securely expose services and capabilities provided by 3GPP network functions to external entities.

7. PCF: Mainly serves as a unified policy framework for guiding network behavior, providing policy rule information to control plane network elements (such as AMF, SMF, etc.).

8. AF: Primarily used to provide services to the 3GPP network, such as interacting with the PCF for policy control, etc.

9. Network Slice Selection Function (NSSF): Mainly used for network slice selection.

10. UDM: Primarily used for managing subscription data of UEs, including the storage and management of UE identifiers, UE access authorization, etc.

11. DN: An operator network primarily used to provide data services to UEs. Examples include the Internet, third-party service networks, IP multimedia service (IMS) networks, etc.

12. AUSF: Mainly used for user authentication, etc.

13. NRF: Primarily used to store descriptions of network function entities and the services they provide.

In the network architecture illustrated in Figure 1, communication between network elements can be achieved through interfaces. For example, a UE connects to an AN device via the Radio Resource Control (RRC) protocol, and communication between the UE and the AN device is conducted through the Uu interface.

It should be understood that the network architecture shown above is merely an example for illustration. The network architecture applicable to the embodiments of this application is not limited thereto. Any network architecture that can implement the functions of the aforementioned network elements is suitable for the embodiments of this application.

It should also be understood that the functions or network elements such as the AMF, SMF, UPF, PCF, UDM, NSSF, and AUSF shown in Figure 1 may be understood as network elements configured to implement different functions, for example, they may be combined as needed to form network slices. These network elements may be independent devices, or they may be integrated into the same device to implement different functions. They may also be network elements within a hardware device, software functions running on dedicated hardware, or virtualized functions instantiated on a platform (e.g., a cloud platform). The specific forms of these network elements are not limited in this application.

It should also be understood that the aforementioned naming is defined only for the purpose of distinguishing different functions and should not be construed as imposing any limitations on this application. This application does not exclude the possibility of using other names in 6G networks or other future networks. For example, in a 6G network, some or all of the above-mentioned network elements may use the terminology from 5G or may use other names, etc.

For ease of understanding of the embodiments of this application, a brief explanation of the basic concepts involved in this application is provided.
1. NTN: This stands for Non-Terrestrial Network, which is a communication network that incorporates aircrafts (e.g., airplanes/drones) or satellites into the communication system to function as relay nodes or base stations. In an NTN network, since satellite devices participate in the communication process, data sent between the UE and the base station needs to be transmitted to the satellite. Due to the long propagation distance, this results in a significant propagation delay, causing the round-trip time (RTT) of data transmission to range from tens to hundreds of milliseconds, whereas the RTT in traditional terrestrial communication networks is only a few milliseconds or even shorter. On the other hand, for UEs, the uplink transmission power is limited, and the path loss increases with the distance, leading to low uplink throughput for UEs at the cell edge and even affecting the uplink coverage area.
2. Ephemeris information: As a possible implementation, the ephemeris information involved in this application comprises but is not limited to orbital parameters, or parameters such as the position of the satellite calculated based on the orbital parameters. It can be understood that the ephemeris information may be used to calculate, predict, depict, or track the satellite's flight status, such as time, position, speed, and the like.

By way of example and not limitation, the ephemeris information may be in the format of position and velocity state vectors, or in the format of orbital parameters. For instance, it could be a 6-dimensional parameter represented in the Earth-Centered, Earth-Fixed (ECEF) coordinate system, which respectively represents the satellite's position state vector (x, y, z) axis and the satellite's velocity state vector (x, y, z) axis, or a 6-dimensional parameter represented in the Earth-Centered Inertial (ECI) coordinate system. It should be noted that this application does not limit the specific form and content of the ephemeris information, and the definition of ephemeris information in existing protocols may be referred to for further details.

In the NTN, ephemeris information plays an important role in communication. For example, the ephemeris information of a satellite is provided by the network, and the UE can calculate the delay from the UE to the satellite based on the location of the UE, and at the same time, the delay from the satellite to the satellite gateway is combined with the delay information provided by the cell. The UE may calculate the end-to-end delay from the UE to the base station, and is used to perform timing advance pre-compensation. In addition, the network may perform data scheduling more properly after learning the timing advance of the UE. However, the ephemeris information has time validity. Therefore, the uplink valid time is defined in the NTN, that is, after receiving the broadcast information carrying the ephemeris information, the UE starts the timer according to the time given by the broadcast information, and the ephemeris information is always accurate and valid before the countdown of the timer ends, and after the timeout, in this case, the UE is considered to be in the uplink out-of-synchronization state. In the out-of-synchronization state, the UE can not perform an uplink operation, for example, uplink data transmission, hybrid automatic repeat request (Hybrid Automatic Repeat reQuest, HARQ) feedback, and scheduling request (scheduling request, SR) transmission, until the UE obtains new ephemeris information, and the UE returns to the uplink synchronization state. The UE can continue to perform uplink operations.

3. Global navigation satellite system (global navigation satellite system, GNSS) information: This refers to the fact that the UE has a positioning capability, so that the UE can obtain its own location. Since the GNSS information is time-sensitive, and it is assumed that the UE (for example, an IoT NTN device in LTE) can not simultaneously obtain GNSS information and perform data transmission over the network, when the GNSS information becomes invalid, the UE needs to leave the connected mode to re-obtain the GNSS information, or when the UE has the capability to do so, the UE may obtain the GNSS information while remaining in the connected mode, but in this case, the network can not perform data transmission or scheduling for the UE.

Furthermore, after the UE enters the connected mode, the UE may report its capability, indicating support for uplink (UL) transmission within a certain period of time after the original validity period of the GNSS information expires. For example, the UE can derive available GNSS information based on expired GNSS information, so that even after the original validity period of the GNSS information expires, the UE can still maintain UL synchronization and perform UL transmission. In this case, when the network sends the configuration information, the network may include indication information, indicating that the network enables UL transmission within a certain period of time after the original validity period of the GNSS information expires. This certain period of time may be marked as a continuation time (duration) X or duration Y. The following uses duration X as an example.

4. Common timing advance (common timing advance, common TA): To adapt to NTN, a common TA may be broadcast by a satellite to ensure time synchronization on a receive side. Because the common TA has a time validity, when the common TA becomes invalid, the UE can not perform an uplink operation.

The foregoing briefly describes, with reference to FIG. 1, a scenario to which the communication method provided in the embodiments of this application can be applied, and introduces basic concepts that may be involved in the embodiments of this application, and introduces ephemeris information, GNSS information, and common TA in the basic concepts. A method for performing uplink data transmission by a UE is as follows: when the GNSS information is valid, the ephemeris information is valid, and the common TA is valid, the UE performs uplink data transmission. In this way, the UE can obtain the location information of the UE based on the valid GNSS information, obtain the location information of the satellite based on the ephemeris information, and then obtain a propagation delay of a service link (service link) from the UE to the satellite. Parameters such as the common TA are used to determine a propagation delay of a feeder link (feeder link). For ease of understanding, with reference to FIG. 2, the propagation delay of the service link and the propagation delay of the feeder link are briefly described.

As shown in Figure 2, the propagation delay of the service link is the delay of the link between the UE and the satellite. Specifically, the UE can obtain its own location information based on the GNSS information, and in addition, the UE can obtain the location information of the satellite based on the ephemeris. Therefore, the UE can determine the propagation delay of the service link based on its own location and the location of the satellite.

Furthermore, as can be seen from Figure 2, the propagation delay of the feeder link comprises two parts: common TA and K mac. Here, the common TA represents the delay between the satellite and the reference point (reference point, RP), while K mac represents the delay between the reference point and the ground base station. Both the common TA and K mac are broadcast by the network, allowing the UE to determine the propagation delay of the feeder link based on the parameters provided by the network. Additionally, the transmission delay between the UE and the reference point is denoted as T_{TA}, which consists of the propagation delay of the serving link and the common TA. The propagation delay of the serving link and the common TA have been explained above, and thus, no further elaboration will be provided here.

As can be learned from the foregoing, in the method for performing uplink data transmission by the UE, the UE combines the propagation delay of the serving link and the propagation delay of the feeder link, so that the UE can calculate delay information such as a TA and an RTT and report the delay information to the network. In other words, in the method for performing uplink data transmission by the UE, even if an uplink transmission extension duration X is used after the GNSS information expires, the UE can not perform the UL transmission when the ephemeris information and/or the common TA become invalid.

To resolve the problem that the UE can not perform the UL transmission when the ephemeris information and/or the common TA expire, this application provides a communication method, so that a terminal device in an NTN network can still continue to perform uplink transmission when the ephemeris information becomes invalid.

It should be understood that the communication method provided in the embodiments of this application may be applied to a system (for example, the communication system 100 shown in FIG. 1) in which communication is performed by using a multi-antenna technology. The communication system may include at least one network device and at least one terminal device.

It should also be understood that the implementation embodiments shown below do not particularly limit a specific structure of an entity that performs the method provided in embodiments of this application, provided that a program that records code of the method provided in embodiments of this application can be run to perform communication according to the method provided in embodiments of this application. For example, the entity that performs the method provided in embodiments of this application may be a terminal device, or may be a functional module in the terminal device that can invoke and execute the program.

FIG. 3 is a schematic flowchart of a communication method according to an embodiment of this application, and the method comprises the following steps:
S310. A network device sends a first message to a terminal device, and correspondingly, the terminal device receives the first message from the network device.

Specifically, the first message indicates that uplink transmission can be performed when the ephemeris information becomes invalid. The ephemeris information becoming invalid may be understood as that the ephemeris information times out, for example, T317 times out. For example, when the first message indicates that T317 times out (or when T317 times out, or when T317 times out), the terminal device may also perform uplink data transmission.

It should be noted that, in this embodiment, after the timer expires, it may be understood as that the timer ends running, a timing period expires, or the timer times out.

In a possible implementation, the first message is new signaling added between the terminal device and the network device. For example, the first message is new indication information, which is different from existing uplink transmission capability extension (ul-TransmissionExtensionEnabled) information.

In this implementation, the first message may implement the foregoing capability (for example, an indication of an uplink transmission function that can be performed when the ephemeris information becomes invalid) independently of the ul-TransmissionExtensionEnabled; or the first message may implement the foregoing capability when the network device sends the ul-TransmissionExtensionEnabled information to the terminal device.

In another possible implementation, the first message is an enhancement of a function of existing signaling between the terminal device and the network device. For example, the first message is ul-TransmissionExtensionEnabled information.

In this implementation, the first message may indicate that uplink transmission can be performed when the ephemeris information becomes invalid, and uplink transmission can be performed when the GNSS becomes invalid. In addition, in this implementation, if a communication system has a legacy UE (legacy UE) (for example, a UE defined in R18) and a newly added UE (for example, a UE defined in R19), after parsing the first message, the legacy UE determines that uplink transmission can be performed when the GNSS becomes invalid; and after parsing the first message, the newly added UE determines that uplink transmission can be performed when the GNSS becomes invalid, and uplink transmission can also be performed when the ephemeris information becomes invalid.

Furthermore, after receiving the first message, the terminal device learns that uplink transmission can be performed when the ephemeris information becomes invalid. In this case, the method procedure shown in FIG. 3 further comprises the following steps:
S320. When the ephemeris information becomes invalid, the terminal device starts or restarts the first timer.

The first timer is used to control a duration of uplink transmission when the ephemeris information becomes invalid. Specifically, during the running period of the first timer, the terminal device can still perform uplink transmission even if the ephemeris information becomes invalid, and after the first timer expires (or when the first timer expires, or when the first timer expires), the terminal device stops uplink transmission.

It should be noted that when the ephemeris information becomes invalid, starting or restarting the first timer may be understood as: a moment at which the first timer is started or restarted is a moment at which the ephemeris information becomes invalid. In this embodiment, the moment at which the first timer is started or restarted may alternatively be another moment, so as to ensure that an end moment of the first timer is a moment after the ephemeris information becomes invalid, thereby achieving an objective of prolonging uplink transmission.

For example, the start or restart moment of the first timer is a moment before the ephemeris information becomes invalid. For example, the start or restart moment of the first timer is a moment when the terminal device sends the first information to the network device, where the first information may be used to indicate that the terminal device supports prolonging the uplink transmission duration. For another example, the start or restart moment of the first timer is a moment when the terminal device receives the second information sent by the network device, where the second information may be information sent by the network device after the network device receives, after sending the first message, information indicating that the terminal device supports prolonging the uplink transmission duration, and which information indicates to start or restart the first timer.

For example, in this embodiment, the network device may indicate to restart the first timer by sending a second message to the terminal device. In this embodiment, the purpose of prolonging uplink transmission may be achieved by restarting the first timer. For example, the network device sends the second message to indicate to restart the first timer during the running period of the first timer, thereby achieving the purpose of prolonging uplink transmission.

In a possible implementation, the second message may be a message sent by the network device to the terminal device during the running of the time alignment timer (time alignment timer, TAT), where the message indicates adjustment of the TA. For example, the network device sends a timing advance command (Timing Advance Command, TAC) MAC control element (MAC control element, MAC CE) to the terminal device, where the TAC MAC CE is used to adjust the TA, so that the terminal device and the network device complete uplink synchronization, and the TAT is restarted after the terminal device receives the TAC MAC CE. The TAC MAC CE may be the second message, that is, the terminal device restarts the first timer after receiving the TAC MAC CE.

In another possible implementation, the second message may be new signaling added between the terminal device and the network device. For example, the second message may be a MAC CE sent by the network device to the terminal device, where the MAC CE is new signaling added between the terminal device and the network device and is used to indicate to restart the first timer. The MAC CE may be the second message, that is, the terminal device restarts the first timer after receiving the MAC CE.

For example, the timing duration (or a running duration, a running period, or the like) of the first timer in this embodiment may be referred to as first duration.

In a possible implementation, the first duration is configured by the network device side.

Optionally, in this implementation, that the first duration is configured by the network device side comprises: The network device sends first indication information to the terminal device, where the first indication information indicates a size of the first duration. For example, the network device learns, based on the currently running TAT, that the currently running TAT will time out at the moment #2. Therefore, the network device may indicate the running duration of the first timer by using the first indication information, so that a timeout moment of the first timer is earlier than or equal to the moment #2. In other words, when configuring the first duration, the network device considers the TAT timeout moment, so that the timeout moment of the first timer is earlier than the timeout moment of the current TAT. For another example, the network device may configure the first duration based on historical communication data by using the first indication information.

As another possible implementation, the first duration is determined by the terminal device side.

Optionally, under this implementation, the first duration being determined by the terminal device side comprises: the terminal device sets the running duration of the first timer to the remaining duration of the TAT based on the currently running TAT.

As described above, the timing duration of the first timer may be determined based on the currently running TAT. To facilitate understanding, the following briefly introduces the concepts related to TAT.

In this embodiment, the TAT is a parameter configured by the network device to indicate the effective duration of the TA. Specifically, during the effective duration of the TA, the uplink remains synchronized, and the terminal device may perform uplink transmission. For example, when determining the TAT, the network device in this embodiment may consider at least one of the following parameters:
cell coverage area, mobility of terminal devices, and ephemeris information of satellites, etc.

For example, if the terminal device moves relatively fast and/or the satellite moves relatively fast, to ensure uplink synchronization accuracy, a smaller TAT may be set, or the TAC MAC CE may be sent at a smaller period, so as to determine an accurate TA in a timely manner and achieve uplink synchronization. For another example, if the terminal device moves relatively slowly and the satellite moves relatively slowly, the network device may determine that the terminal device and the satellite have a small change in position within a period of time, and the determined TA remains accurate for a relatively long time. In this case, the network device may set a larger TAT, or send the TAC MAC CE used for adjusting the TA at a larger period. It should be noted that each time the TAC MAC CE is sent and received, the network device side and the UE side both restart the TAT.

It may be understood that, in the process of determining the TAT, the network device considers the satellite ephemeris information and the mobility of the terminal device, so that the determined TAT can be relatively accurate. This is equivalent to after uplink synchronization between the terminal device and the network device, if the network device determines, based on the satellite ephemeris information and the mobility of the terminal device, that the change in relative positions is relatively small within a certain period of time, the uplink synchronization can also be maintained within this time period. Therefore, the TAT may be set, and uplink synchronization may be considered to be valid during the TAT, while uplink synchronization may be considered to be necessary again when the TAT expires.

It should be understood that the foregoing example of the parameter referred to when the TAT is determined is merely an example, and does not constitute any limitation on the protection scope of this application. For related descriptions of the TAT, refer to the prior art, and details are not described herein again.

In this embodiment, whether the ephemeris information is invalid may be determined based on the second timer, where a parameter related to the second timer may be learned through a system message. Before the network device sends the first message to the terminal device, the method procedure shown in FIG. 3 further comprises the following steps:
S311. The network device sends a third message to the terminal device. Correspondingly, the terminal device receives the third message from the network device.

Specifically, the third message indicates the second duration and the second moment, where the second moment is a start moment of the second timer, and the second duration is a running duration of the second timer. The ephemeris information is valid during the second duration, and the ephemeris information becomes invalid after the second timer expires.

Optionally, the third message is a system message broadcast by the network device, where the system message comprises the second moment indication information and the second duration indication information. The second moment indication information is used to indicate an effective moment of the assistance information, and the second duration indication information is used to indicate an effective duration of the assistance information, where the assistance information comprises ephemeris information and/or a common TA. For example, the second moment indication information is an epoch time, the second duration indication information is an ul-SyncValidityDuration, the second epoch time indicates an epoch time of the NTN assistance information, and the ul-SyncValidityDuration indicates an effective validity period configured by the network device side for the assistance information (ephemeris information and common TA parameter), and indicates a maximum time within which the UE can apply the assistance information without obtaining new assistance information. For descriptions of the epoch time and the ul-SyncValidityDuration fields, refer to the prior art, and details are not described herein again.

As an example instead of a limitation, the system information may be a system information block 31 (system information block 31, SIB31), where the SIB31 carries the time indication information (epoch time) and the duration indication information (ul-SyncValidityDuration). The second timer may be T317.

It should be noted that this embodiment uses the ephemeris information as an example to illustrate that the first timer may be started, so as to achieve an objective of prolonging uplink transmission when the ephemeris information becomes invalid. The T317 may also be used to indicate a failure moment of the common TA. For example, when the T317 expires, the ephemeris information becomes invalid, and the common TA becomes invalid. Similar to the foregoing manner, the third timer may be started, so as to achieve an objective of prolonging uplink transmission when the common TA becomes invalid. For related descriptions of the third timer, refer to the foregoing descriptions of the first timer, and details are not described herein again. For example, the terminal device receives a message #1, where the message #1 indicates that uplink transmission can be performed when the common TA becomes invalid. When the common TA becomes invalid, the third timer is started or restarted, and uplink transmission is performed when the third timer is running; or uplink transmission is stopped when the third timer expires.

Further, when the terminal device learns of the first timer and the second timer, the terminal device may perform uplink transmission based on the first timer and the second timer. The method procedure shown in FIG. 3 further comprises the following steps:
S330. The terminal device performs uplink transmission.

Specifically, that the terminal device performs uplink transmission based on the first timer and the second timer in this embodiment comprises:
When the terminal device performs uplink transmission, the terminal device obtains valid (valid) ephemeris information (for example, updated ephemeris information), the second timer is restarted, the first timer is stopped, and the terminal device is still in the connected state, and may continue to perform uplink data transmission; or,
When the terminal device performs uplink transmission, after the terminal device does not obtain valid ephemeris information (for example, after T318 times out), the first timer times out, and the terminal device performs a reestablishment or leaves the connected state; or,
When the terminal device performs uplink transmission, the first timer expires, and valid ephemeris information is not obtained (for example, T318 is enabled but has not yet expired), the terminal device stops the uplink transmission.

Optionally, after the first timer expires, the terminal device may still obtain updated ephemeris information (for example, valid ephemeris information). If the updated ephemeris information is obtained, the terminal device may continue to perform uplink transmission based on the updated ephemeris information, for example, restart the second timer, and start the first timer when a first timer start condition is met.

In the communication method shown in FIG. 3, after receiving the first message, the terminal device learns, based on the first message, that uplink transmission may be performed when the ephemeris information becomes invalid. In addition, when the ephemeris information becomes invalid, the terminal device starts or restarts the first timer, so as to control, based on the first timer, a duration of uplink transmission when the ephemeris information becomes invalid. Specifically, the terminal device may perform uplink transmission when the first timer is running, and the terminal device stops the uplink transmission after the first timer expires (or when the first timer expires, or when the first timer expires). In this technical solution, the first message may indicate the terminal device to perform uplink transmission when the ephemeris information becomes invalid. In addition, the terminal device may start or restart the first timer when the ephemeris information becomes invalid, to control a duration of uplink transmission when the ephemeris information becomes invalid, thereby enabling the terminal device to continue uplink transmission when the ephemeris information becomes invalid.

It should be understood that the sequence numbers of the foregoing processes do not mean the order of execution. The execution sequences of the processes should be determined based on functions and internal logic of the processes, and should not be construed as any limitation on the implementation processes of embodiments of this application.

It should also be understood that, in embodiments of this application, unless otherwise specified or there is a logical conflict, terms and/or descriptions in different embodiments have consistency and may be mutually referenced, and technical features in different embodiments may be combined based on an internal logical relationship thereof, to form a new embodiment.

It should also be understood that in the foregoing embodiments, devices (such as a network device, a terminal device, and the like) in an existing network architecture are mainly used as examples for description. It should be understood that a specific form of the device is not limited in embodiments of this application. For example, devices that can implement the same functions in the future are all applicable to embodiments of this application.

It may be understood that the methods and operations implemented by the device (for example, the network device or the terminal device) in the foregoing method embodiments may also be implemented by components (for example, a chip or a circuit) of the device.

The foregoing has described in detail the communication method provided in the embodiments of this application with reference to FIG. 2. The foregoing communication method is mainly described from the perspective of interaction between a terminal device and a network device. It may be understood that, to implement the foregoing functions, the terminal device and the network device each include a corresponding hardware structure and/or software module for performing each function.

The person skilled in the art should be aware that, in combination with units and algorithm steps of the examples described in embodiments disclosed in this specification, this application can be implemented through hardware or a combination of hardware and computer software. Whether a function is performed through hardware or hardware driven by computer software depends on particular applications and design constraints of the technical solutions. The person skilled in the art may use different methods to implement the described functions for each particular application, but it should not be considered that the implementation goes beyond the scope of this application.

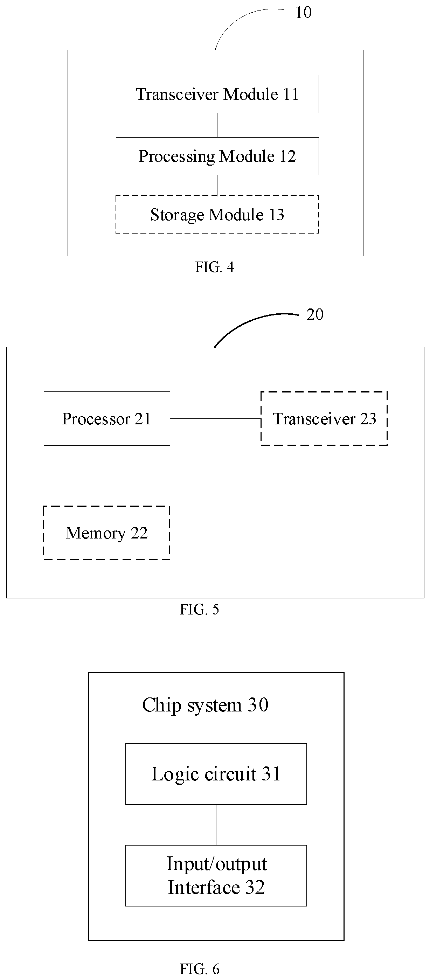

The following describes in detail the communication apparatus provided in this application with reference to FIG. 4 to FIG. 6. It should be understood that the descriptions of the apparatus embodiments correspond to the descriptions of the method embodiments. Therefore, for content that is not described in detail, refer to the foregoing method embodiments. For brevity, some content is not described again.

In the embodiments of this application, the transmitting device or the receiving device may be divided into function modules based on the foregoing method example. For example, each function module may be obtained through division based on each corresponding function, or two or more functions may be integrated into one processing module. The integrated module may be implemented in a form of hardware, or may be implemented in a form of a software function module. It should be noted that the module division in the embodiments of this application is an example, and is merely logical function division, and may be other division in actual implementation. The following uses an example in which each function module is obtained through division based on each corresponding function for description.

FIG. 4 is a schematic block diagram of a communication apparatus 10 according to an embodiment of this application. The apparatus 10 comprises a transceiver module 11 and a processing module 12. The transceiver module 11 may implement a corresponding communication function, and the processing module 12 is configured to perform data processing. In other words, the transceiver module 11 is configured to perform operations related to receiving and sending, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements the actions of the device in the foregoing method embodiments.

In a design, the apparatus 10 may correspond to the terminal device in the foregoing method embodiment, or may be a component (for example, a chip) of the terminal device.

The apparatus 10 may implement steps or procedures performed by the terminal device in the foregoing method embodiments. The transceiver module 11 may be configured to perform a receiving and sending-related operation of the terminal device in the foregoing method embodiments, and the processing module 12 may be configured to perform a processing-related operation of the terminal device in the foregoing method embodiments.

In a possible implementation, the transceiver module 11 is configured to receive a first message, where the first message indicates an uplink transmission that can be performed when the ephemeris information becomes invalid. The processing module 12 is configured to: when the ephemeris information becomes invalid, start or restart a first timer; where an uplink transmission is performed during first duration, where the first duration is a running duration of the first timer; and stop the uplink transmission after the first timer expires.

When the apparatus 10 is configured to perform the method in FIG. 2, the transceiver module 11 may be configured to perform steps of receiving and sending information in the method, such as steps S311, S310, and S330; and the processing module 12 may be configured to perform processing steps in the method, such as step S320.

It should be understood that a specific process in which each unit performs the foregoing corresponding steps has been described in detail in the foregoing method embodiments. For brevity, details are not described herein again.

In another design, the apparatus 10 may correspond to the network device in the foregoing method embodiment, or may be a component (for example, a chip) of the network device.

The apparatus 10 may implement the steps or procedures performed by the network device in the foregoing method embodiments. The transceiver module 11 may be configured to perform operations related to receiving and sending by the network device in the foregoing method embodiments, and the processing module 12 may be configured to perform operations related to processing by the network device in the foregoing method embodiments.

In a possible implementation, the processing module 12 is configured to determine a first message, where the first message indicates an uplink transmission that can be performed when the ephemeris information becomes invalid. The transceiver module 11 is configured to send the first message.

When the device 10 is configured to perform the method in Figure 2, the transceiver module 11 may be used to perform the steps of receiving and sending information in the method, such as steps SS311, S310, and S330; and the processing module 12 may be used to perform the processing steps in the method.

It should be understood that the specific processes by which each unit performs the corresponding steps have been described in detail in the foregoing method embodiments, and details will not be repeated herein.

It should also be understood that the apparatus 10 herein is embodied in the form of functional modules. The term "module" herein may refer to an application-specific integrated circuit (ASIC), an electronic circuit, a processor (such as a shared processor, a dedicated processor, or a group of processors, etc.) configured to execute one or more software or firmware programs and a memory, combined logic circuits, and/or any other suitable component that supports the described functions. In an optional example, the person skilled in the art may understand that the apparatus 10 may specifically be the mobility management network element in the foregoing embodiments, and may be configured to perform the processes and/or steps corresponding to the mobility management network element in the foregoing method embodiments; or, the apparatus 10 may specifically be the terminal device in the foregoing embodiments, and may be configured to perform the processes and/or steps corresponding to the terminal device in the foregoing method embodiments. To avoid repetition, details are not described herein again.

The apparatus 10 of each of the foregoing solutions has a function of implementing the corresponding steps performed by the device (such as a terminal device or a network device) in the foregoing methods. This function may be implemented by hardware, or may be implemented by hardware executing corresponding software. The hardware or software comprises one or more modules corresponding to the foregoing functions. For example, a transceiver module may be replaced by a transceiver (for example, a sending unit in the transceiver module may be replaced by a transmitter, and a receiving unit in the transceiver module may be replaced by a receiver), and another unit, such as a processing module, may be replaced by a processor, to separately perform the receiving and sending operations and the related processing operations in each method embodiment.

In addition, the transceiver module 11 may alternatively be a transceiver circuit (for example, may include a receiving circuit and a sending circuit), and the processing module may be a processing circuit.

FIG. 5 is a schematic diagram of another communication apparatus 20 according to an embodiment of this application. The apparatus 20 comprises a processor 21, where the processor 21 is configured to execute a computer program or instructions stored in a memory 22, or read data/signaling stored in the memory 22, to perform the methods in the foregoing method embodiments. Optionally, there is one or more processors 21.

Optionally, as shown in FIG. 5, the apparatus 20 further comprises a memory 22, and the memory 22 is configured to store a computer program or instructions and/or data. The memory 22 may be integrated with the processor 21, or may be disposed separately. Optionally, there is one or more memories 22.

Optionally, as shown in FIG. 5, the apparatus 20 further comprises a transceiver 23, and the transceiver 23 is configured to receive and/or send a signal. For example, the processor 21 is configured to control the transceiver 23 to receive and/or send a signal.

In a solution, the apparatus 20 is configured to implement operations performed by the terminal device in the foregoing method embodiments.

It should be understood that the processor mentioned in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should also be understood that the memory mentioned in the embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example and not a limitation, the RAM comprises the following several forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should also be noted that the memory described in this specification is intended to include but not limited to these memories and any memory of another proper type.

FIG. 6 is a schematic diagram of a chip system 30 according to an embodiment of this application. The chip system 30 (or may also be referred to as a processing system) comprises a logic circuit 31 and an input/output interface (input/output interface) 32.

The logic circuit 31 may be a processing circuit in the chip system 30. The logic circuit 31 may be coupled to a storage unit, and invoke an instruction in the storage unit, so that the chip system 30 can implement the methods and functions in the embodiments of this application. The input/output interface 32 may be an input/output circuit in the chip system 30, which outputs information processed by the chip system 30, or inputs data or signaling information to be processed into the chip system 30 for processing.

As a solution, the chip system 30 is configured to implement operations performed by the terminal device in the foregoing method embodiments.

For example, the logic circuit 31 is configured to implement a processing-related operation performed by the terminal device in the foregoing method embodiments, and the input/output interface 32 is configured to implement a sending and/or receiving-related operation performed by the terminal device in the foregoing method embodiments.

An embodiment of this application further provides a computer-readable storage medium, which stores computer instructions for implementing the methods performed by the device in the foregoing method embodiments.

For example, when the computer program is executed by a computer, the computer is enabled to implement the methods performed by the terminal device or the network device in the foregoing method embodiments.

An embodiment of this application further provides a computer program product, including an instruction, where the instruction is executed by a computer to implement the methods performed by the terminal device or the network device in the foregoing method embodiments.

Embodiments of this application further provide a communication system, including the foregoing terminal device and network device.

For explanations of related content and beneficial effects in any one of the foregoing apparatuses, refer to the corresponding method embodiments provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. The person skilled in the art may use different methods to implement the described functions for each particular application, but it should not be considered that the implementation goes beyond the scope of this application.

The person skilled in the art may clearly understand that, for the purpose of convenient and brief description, for a detailed working process of the foregoing described system, apparatus, and unit, refer to a corresponding process in the foregoing method embodiments. Details are not described herein again.

In several embodiments provided in this application, it should be understood that the disclosed systems, apparatuses, and methods may be implemented in other ways. For example, the apparatus embodiments described above are merely examples. For example, the division of the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected according to an actual need to achieve the objectives of the solutions in embodiments.

In addition, the functional units in embodiments of this application may be integrated into one processing unit, each of the units may exist alone physically, or two or more units may be integrated into one unit.

When the functions are implemented in the form of software functional units and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and comprises several instructions for instructing a computer device (which may be a personal computer, a server, or a network device) to perform all or some of the steps of the methods described in embodiments of this application. The foregoing storage medium comprises any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of this application, but the protection scope of this application is not limited thereto. Any variation or replacement readily figured out by the person skilled in the art within the technical scope disclosed in this application shall fall within the protection scope of this application. Therefore, the protection scope of this application shall be determined according to the protection scope of the claims.

## Claims

1. A communication method, comprising:
receiving a first message, wherein the first message indicates that an uplink transmission can be performed when ephemeris information becomes invalid;
starting or restarting a first timer when the ephemeris information becomes invalid, wherein the uplink transmission is performed during first time duration, and wherein the first time duration is the running duration of the first timer; and
stopping the uplink transmission after the first timer expires.

2. The method according to claim 1, wherein the method further comprises:
receiving a second message and restarting the first timer during the first time duration.

3. The method according to claim 1 or 2, wherein the first duration is configured by a network device side, or the first duration is determined by a terminal device side.

4. The method according to any one of claims 1 to 3, wherein the stopping the uplink transmission after the first timer expires comprises:
after the first timer expires, obtaining the updated ephemeris information, and stopping the uplink transmission.

5. The method according to claim 4, wherein the method further comprises:
performing the uplink transmission based on the updated ephemeris information.

6. The method according to any one of claims 1 to 5, wherein before the first message is received, the method further comprises:
receiving a third message, wherein the third message indicates second duration and a second moment, the second moment is a start moment of a second timer, and the second duration is an operating duration of the second timer;
wherein performing the uplink transmission during the second duration; and after the second timer expires, the ephemeris information becomes invalid.

7. The method according to claim 6, wherein the after the second timer expires, the ephemeris information becomes invalid comprises:
obtaining updated ephemeris information after the second timer expires;
restarting the second timer and stopping the first timer.

8. The method according to any one of claims 1 to 7, wherein the first message comprises uplink transmission extension capability information, and the uplink transmission extension capability information further indicates that the uplink transmission can be performed when a global navigation satellite system information GNSS becomes invalid.

9. A communication method, comprising:
determining a first message, wherein the first message indicates that an uplink transmission can be performed when ephemeris information becomes invalid;
sending the first message.

10. The method according to claim 9, wherein the method further comprises:
sending configuration information, wherein the configuration information is used to configure first duration, the first duration is an operating duration of a first timer, and the first timer is used to control a duration of uplink transmission when the ephemeris information becomes invalid.

11. The method according to claim 10, wherein the method further comprises:
sending a second message, wherein the second message is used to indicate to restart the first timer.

12. The method according to any one of claims 9 to 11, wherein before the sending the first message, the method further comprises:
sending a third message, wherein the third message indicates second duration and a second moment, the second moment is a start moment of a second timer, the second duration is an operating duration of the second timer, and the second timer is used to control an invalidation moment of the ephemeris information.

13. The method according to any one of claims 9 to 12, wherein the first message comprises uplink transmission extension capability information, and the uplink transmission extension capability information further indicates that the uplink transmission can be performed when the global navigation satellite system information GNSS becomes invalid.

14. A communication apparatus, wherein the apparatus is configured to implement the method according to any one of claims 1 to 8.

15. The communication apparatus according to claim 14, wherein the communication apparatus comprises a terminal device or a chip.

16. A communication apparatus, configured to implement the method according to any one of claims 9 to 13.

17. The communication apparatus according to claim 16, wherein the communication apparatus comprises a network device or a chip.

18. A computer-readable storage medium, wherein the computer-readable storage medium stores computer instructions, and when the computer instructions are run, the method according to any one of claims 1 to 13 is performed.

19. A computer program product comprising a computer program or instructions, wherein when the computer program or the instructions are run, the method according to any one of claims 1 to 13 is implemented.
